# EUROPEAN PATENT APPLICATION

(11) **EP 2 525 311 A1**
(43) Date of publication of application: **21.11.2012**
(21) Application number: 12167355.2
(22) Date of filing: 09.05.2012
(51) Int. Cl.: G06Q 10/02, G07F 15/08, G06Q 50/06

(54) **Systems and methods for auctioning charging times for electric vehicles**

(30) Priority: 18.05.2011 US 201113110415
(71) Applicant: General Electric Company, Schenectady, NY 12345 (US)
(72) Inventor: Boot, John Christopher, Sandy Springs, GA 30328 (US); Vukojevic, Aleksandar, Atlanta, GA 30350 (US)
(74) Representative: Picker, Madeline Margaret

(57) **Abstract**

Systems and methods are provided for auctioning charging times for electric vehicles (205) at one or more charging stations (210). The systems (100) and methods may include delivering, to a customer computing device (103) associated with a customer, auction information regarding an auction for at least one time slot of a charging station (210) for an electric vehicle (205); receiving, from the customer computing device (103), a bid amount for the auction; and delivering a notification to the customer computing device (103) if the received bid amount is accepted as a winning bid amount for the auction.

## Description

### FIELD OF THE INVENTION

Embodiments of the invention relate generally to electric vehicles, and more particularly, to systems and methods for auctioning charging times for electric vehicles.

### BACKGROUND OF THE INVENTION

Electric vehicle charging requires more planning than for refueling of gasoline vehicles, as there are limited places to recharge vehicle batteries and the charge time is typically hours instead of a few minutes. At peak times and locations, the demand for recharging spaces may exceed available charging stations or charging capacity. Accordingly, there is an opportunity in the industry for systems and methods for auctioning charging times for electric vehicles.

### BRIEF DESCRIPTION OF THE INVENTION

Some or all of the above needs and/or problems may be addressed by certain embodiments of the invention. Embodiments of the invention may include systems and methods for auctioning charging times for electric vehicles. According to one embodiment of the invention, there is disclosed at least one memory that stores computer-executable instructions, and at least one processor configured to access the at least one memory. At least one processor may be configured to execute the computer-executable instructions to: deliver, to a customer computing device associated with a customer, auction information regarding an auction for at least one time slot of a charging station for an electric vehicle; receive, from the customer computing device, a bid amount for the auction; and deliver, a notification to the customer computing device if the received bid amount is accepted as a winning bid amount for the auction.

According to another example embodiment, there is a method. The method may include delivering, by a service provider computer to a customer computing device associated with a customer, auction information regarding an auction for at least one time slot of a charging station for an electric vehicle; receiving, by the service provider computer from the customer computing device, a bid amount for the auction; and delivering, by the service provider computer, a notification to the customer computing device if the received bid amount is accepted as a winning bid amount for the auction.

Other embodiments, aspects, and features of the invention will become apparent to those skilled in the art from the following detailed description, the accompanying drawings, and the claims.

### BRIEF DESCRIPTION OF THE DRAWINGS

Reference will now be made to the accompanying drawings, which are not necessarily drawn to scale, and wherein:
FIG. 1 illustrates an example electric vehicle charging reservation system, according to an example embodiment of the invention.
FIG. 2 illustrates an example recharging system, according to an example embodiment of the invention.
FIG. 3 illustrates an example flow diagram for an example process for managing bids in accordance with an auction for one or more time slots at one or more charging stations, according to an example embodiment of the invention.
FIG. 4 illustrates an example process for determining and notifying a customer who wins one or more time slots for one or more charging stations upon completion of an auction, according to an example embodiment of the invention.
FIG. 5 illustrates an example flow diagram for an example process for processing an activation request at a charging station, according to an example embodiment of the invention.

### DETAILED DESCRIPTION OF EMBODIMENTS OF THE INVENTION

Illustrative embodiments of the invention now will be described more fully hereinafter with reference to the accompanying drawings, in which some, but not all embodiments of the invention are shown. Indeed, the invention may be embodied in many different forms and should not be construed as limited to the embodiments set forth herein; rather, these embodiments are provided so that this disclosure will satisfy applicable legal requirements. Like numbers refer to like elements throughout.

Disclosed are systems and methods for auctioning charging times for electric vehicles. These electric vehicles can have a rechargeable battery or power source that can be recharged using a wired connection to a power supply, for example, by plugging into a vehicle charging station or power socket to access a power supply. Alternatively, these electric vehicles can be recharged wirelessly, perhaps through inductive coupling, where the inductive fields utilized for recharging may be generated using power from the power source. For convenience, a plug-in electric vehicle (PEV) that is referenced herein may refer to one or both of an electric vehicle that is rechargeable using a wired connection or a wireless connection. Likewise, it will be appreciated that these electric vehicles may be electric-only vehicles or hybrid vehicles that can operate using electricity or another power/fuel source such as gasoline, natural gas, other petroleum products, fuel cells, or the like. Many variations of electric vehicles may be utilized in accordance with example embodiments of the invention.

As will be described in further detail herein, customers can bid for charging times or time slots at one or more charging stations to recharge one or more electric vehicles. To enable customer bidding, a service provider may auction the charging times or time slots via an auction website or portal, which can include an Internet-based auction website or portal. At the auction website or portal, the customer can search, locate, and bid for a time slot for recharging a vehicle at a charging station. It will be appreciated that the auction website or portal can support a variety of auction formats, including an ascending price auction or a descending price auction (e.g., a Dutch auction). The auction formats can also include various options, including reserve prices (e.g., minimum price for a definitive acceptance of a bid), a buy-it-now price (e.g., to end an auction early), and/or auction pre-bidding (to end an auction before it begins). In addition, the bid amounts, including the reserve prices or amounts, for the auction may vary depending upon the time of day or actual or anticipated demand during the charging time or time slot. Indeed, electricity rates can vary depending upon the time or day. Similarly, the bid amount for a time slot for recharging can vary depending upon a time of day or actual or expected demand during the time slot. The demand may be based upon an actual or expected load at the charging station or on a power supply component (e.g., a transformer) / distribution equipment that supplies power to the charging station during the time slot.

Upon winning an auction, the winning customer may further provide deposit/payment or payment information in order to complete the auction and reserve the winning charging time or time slot at the charging station. The customer may receive a reservation confirmation upon completion of the auction. The customer may also receive a reservation code to activate or use a charging station during the reserved time slot.

Various embodiments of the invention may include one or more special purpose computers, systems, and/or particular machines that facilitate the network communications between or among service provider computers, customer computing devices, and/or charging station controllers. A special purpose computer or particular machine may include a wide variety of different software modules as desired in various embodiments. As explained in greater detail below, in certain embodiments, these various software components may be utilized to facilitate auction or bidding of one or more time slots at one or more charging stations, as well as to facilitate the activation and use of one or more charging stations.

Certain embodiments of the invention described herein may have the technical advantage of reserving a charging time or time slot at one or more charging stations upon a customer winning an auction. Indeed, when a time slot has been reserved at a charging station, other users besides the reserving customer may be prevented from utilizing or accessing the charging station, or at least a portion thereof, during the reserved time slot. If a time slot has not been reserved at a charging station, then the charging station may be available for access by any drive-up electric vehicle.

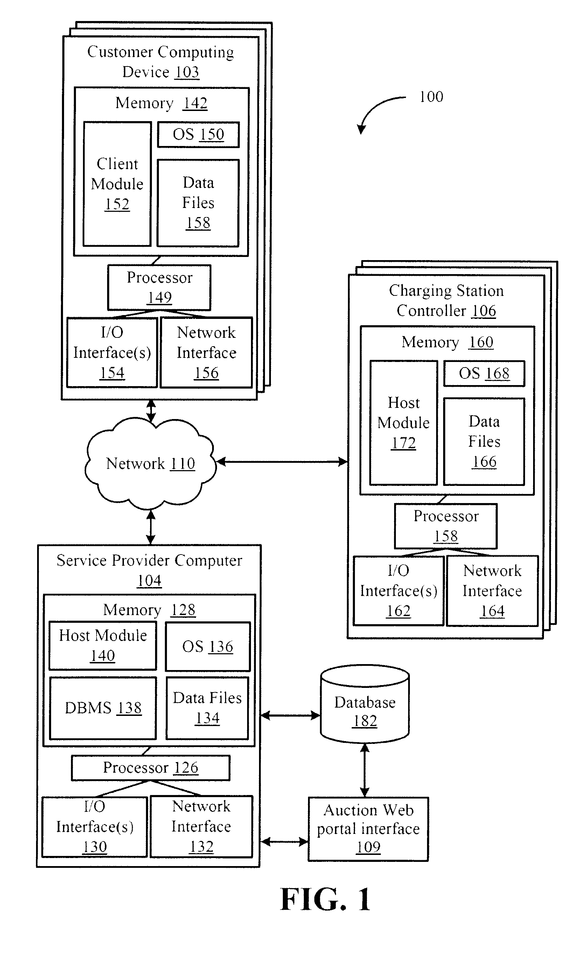

As shown in FIG. 1, an auction system 100 for electric vehicle charging times may include a customer computing device 103, a service provider computer 104, and a charging station controller 106, which are each configured for accessing and reading associated computer-readable media having stored thereon data and/or computer-executable instructions for implementing the various methods of the invention. Generally, network devices and systems, including the one or more customer computing devices 103, service provider computers 104, and charging station controllers 106 have hardware and/or software for transmitting and receiving data and/or computer-executable instructions over a communications link and a memory for storing data and/or computer-executable instructions. These network devices and systems may also include a processor for processing data and executing computer-executable instructions, as well as other internal and peripheral components that are well-known in the art. As used herein, the term "computer-readable medium" may describe any form of memory or computer-readable storage device.

As shown in FIG. 1, the customer computing device 103, service provider computer 104, and charging station controller 106 may be in communication with each other via a network, such as network 110, which as described below can include the Internet or one or more separate or shared private and public networks. Each of these components-the customer computing device 103, the service provider computer 104, the charging station controller 106, and the network 110- will now be discussed in further detail.

First, the customer computing device 103 may be any processor-driven device that can be used by a customer to locate, view, and bid for available time slots at one or more charging stations for recharging an electric vehicle. The customer computing device 103 may comprise a tablet computer (e.g., iPad™, Samsung Galaxy™, etc.), a desktop computer, a laptop computer, a personal computer, a handheld computer or a personal communications device (e.g., a netbook, specialized reservation device, etc.), a smart phone (e.g., iPhone™, BlackBerry™, HTC™ phone, etc.), or the like. In addition to having a processor 149, the customer computing device 103 may further include a memory 142, input/output ("I/O") interface(s) 154, and a network interface 156. The memory 142 may store data files 158 and various program modules, such as an operating system ("OS") 150 and a client module 152. The memory 142 may be any computer-readable medium, coupled to the processor 149, such as RAM, ROM, and/or a removable storage device for storing data files 158 and a database management system ("DBMS") to facilitate management of data files 158 and other data stored in the memory 142 and/or stored in separate databases. The OS 150 may be, but is not limited to, Microsoft Windows®, Apple OSX™, Unix™, or a mainframe operating system. The client module 152 may be an Internet browser or other software, including a mobile software application or dedicated program, for interacting with the service provider computer 104. For example, a customer may utilize the client module 152 to interact with the service provider computer 104 via a website or Internet portal to identify and place a bid for one or more time slots at one or more charging stations, as described herein. The client module 152 may also be utilized to retrieve or otherwise receive data, messages, or responses from the service provider computer 104 and/or the charging station controller 106.

Still referring to the customer computing device 103, the I/O interface(s) 154 may facilitate communication between the processor 149 and various I/O devices, such as a keyboard, mouse, printer, microphone, speaker, monitor, bar code readers/scanners, RFID readers, and the like. The network interface 156 may take any of a number of forms, such as a network interface card, a modem, a wireless network card, and the like. It will be appreciated that while customer computing device 103 has been illustrated as a single computer or processor, the customer computing device 103 may be comprised of a group of computers or processors, according to an example embodiment of the invention.

The service provider computer 104 may be any processor-driven device that is configured for receiving, processing, and fulfilling requests from the customer computing device 103 and/or charging station controller 106. The service provider computer 104 may include a processor 126, a memory 128, input/output ("I/O") interface(s) 130, and a network interface 132. The memory 128 may be any computer-readable medium, coupled to the processor 126, such as RAM, ROM, and/or a removable storage device for storing data files 134 and a database management system ("DBMS") 138 to facilitate management of data files 134 and other data stored in the memory 128 and/or stored in one or more databases 182. The memory 128 may store data files 134 and various program modules, such as an operating system ("OS") 136, a database management system ("DBMS") 138, and the host module 140. The OS 136 may be, but is not limited to, Microsoft Windows®, Apple OSX™, Unix™, or a mainframe operating system. The host module 140 may receive, process, and respond to requests from the client module 152 of the customer computing device 103 and/or from the host module 172 of the charging station controller 106. The host module 140 can also communicate with one or more financial processing computers to complete or process one or more customer payments described herein.

In addition, an auction web portal interface 109 may also be operative with or otherwise included with the service provider computer 104. In particular, the auction web portal interface 109 may allow for a customer computing device 103 or another computer to access an auction supported by the service provider computer 104 via an Internet website or portal. For example, a customer computing device 103 may access the auction web portal interface 109 via the Internet of network 110. The auction web portal interface 109 may be provided by a separate processor-based system that is distinct from the service provider computer 104. By way of example, the auction web portal interface 109 may be provided by a web server that is in communication with the network 110 and the service provider computer 104. Alternatively, it will be appreciated that the auction web portal interface 109 may also be incorporated into the service provider computer 104 as well, perhaps as part of host module 140, according to another example embodiment of the invention. It will be appreciated that the Internet website or portal supported by the auction web portal interface 109 may facilitate the locating, viewing, and bidding for one or more available time slots at one or more charging stations for recharging an electric vehicle.

The service provider computer 104 and/or auction web portal interface 109 may also include or be in communication with one or more database(s) 182, according to an example embodiment of the invention. The database 182 may store, for example, access information (e.g., customer username, password, etc.), auction information for time slots at one or more charging stations, reservation and availability information for one or more charging stations, reservation confirmations and codes, payment information/instructions, and the like. The database 182 may also store rate and pricing information, which may be set by a utility provider based upon actual or expected demands or loads. It will be appreciated that yet other information received from or provided to customers or utility providers may be stored in the database 182, according to an example embodiment of the invention. Although a single database 182 is referred to herein for simplicity, those skilled in the art will appreciate that multiple physical and/or logical databases may be used to store the above mentioned data. For security and performance purposes, the service provider computer 104 may have a dedicated connection to the database 182. However, the service provider computer 104 may also communicate with the database 182 via a network 110, as shown. In other embodiments of the invention, the service provider computer 104 may include the database 182 locally. The service provider computer 104 may also otherwise be part of a distributed or redundant DBMS.

The charging station controller 106 may be any processor-driven device for controlling access or utilization of one or more charging stations, according to an example embodiment of the invention. The charging station controller 106 may include a processor 158, a memory 160, input/output ("I/O") interface(s) 162, and a network interface 164. The memory 160 may be any computer-readable medium, coupled to the processor 158, such as RAM, ROM, and/or a removable storage device for storing data files 166 and a database management system ("DBMS") to facilitate management of data files 166 and other data stored in the memory 160 and/or stored in separate databases. The memory 160 may store data files 166 and various program modules, such as an operating system ("OS") 168, a database management system ("DBMS"), and a host module 172. The OS 168 may be, but is not limited to, Microsoft Windows®, Apple OSX™, Unix™, or a mainframe operating system. The host module 172 may receive, process, and respond to requests from the host module 140 of the service provider computer 104. In an example embodiment of the invention, the host module 172 of the charging station controller 106 can be used to communicate electronically with the service provider computer 104 and/or a financial processing computer, using the network 110.

Still referring to the charging station controller 106, the I/O interface(s) 162 may facilitate communication between the processor 158 and various I/O devices, such as a keypad, touch screen, printer, microphone, speaker, monitor, bar code readers/scanners, magnetic card stripe readers, RFID or other wireless readers, and the like. The network interface 164 may take any of a number of forms, such as a network interface card, a modem, a wireless network card, and the like. It will be appreciated that while the charging station controller 106 has been illustrated as a single computer or processor, the charging station controller 106 may be comprised of a group of computers or processors, according to an example embodiment of the invention.

The network 110 may include any telecommunication and/or data network, whether public, private, or a combination thereof, including a local area network, a wide area network, an intranet, an internet, the Internet, intermediate hand-held data transfer devices, a publicly switched telephone network (PSTN), and/or any combination thereof and may be wired and/or wireless.

Generally, each of the memories and data storage devices, such as the memories 142, 128, 160 and the database 182, and/or any other memory and data storage device, can store data and information for subsequent retrieval. In this manner, the system 100 can store various received or collected information in memory or a database associated with one or more customer computing devices 103, service provider computers 104, and/or charging station controllers 106. The memories and databases can be in communication with each other and/or other databases, such as a centralized database, or other types of data storage devices. When needed, data or information stored in a memory or database may be transmitted to a centralized database capable of receiving data, information, or data records from more than one database or other data storage devices. In other embodiments, the databases shown can be integrated or distributed into any number of databases or other data storage devices. In one example embodiment, for security, the service provider computer 104 (or any other entity) may have a dedicated connection to the database 182, as shown; though, in other embodiments, the service provider computer 104 or another entity may communicate with the database 182 via a network such as the network 110.

Suitable processors, such as the processors 149, 126, 158 of the customer computing devices 103, service provider computers 104, and/or charging station controllers 106, respectively, may comprise a microprocessor, an ASIC, and/or a state machine. Example processors can be those provided by Intel Corporation (Santa Clara, CA), AMD Corporation (Sunnyvale, CA), and Motorola Corporation (Schaumburg, IL). Such processors comprise, or may be in communication with media, for example, computer-readable media, which stores instructions that, when executed by the processor, cause the processor to perform the elements described herein. Embodiments of computer-readable media include, but are not limited to, an electronic, optical, magnetic, or other storage or transmission device capable of providing a processor with computer-readable instructions. Other examples of suitable media include, but are not limited to, a floppy disk, CD-ROM, DVD, magnetic disk, memory chip, ROM, RAM, a configured processor, all optical media, all magnetic tape or other magnetic media, or any other medium from which a computer processor can read instructions. Also, various other forms of computer-readable media may transmit or carry instructions to a computer, including a router, private or public network, or other transmission device or channel, both wired and wireless. The instructions may comprise code from any computer-programming language, including, for example, C, C++, C#, Visual Basic, Java, Python, Perl, and JavaScript. Furthermore, any of the processors may operate any operating system capable of supporting locally executed applications, client-server based applications, and/or browser or browser-enabled applications.

The system 100 shown in and described with respect to FIG. 1 is provided by way of example only. Numerous other operating environments, system architectures, and device configurations are possible. Other system embodiments can include fewer or greater numbers of components and may incorporate some or all of the functionality described with respect to the system components shown in FIG. 1. For example, while some components may be referred to in singular form, they may exist in multiples or in plural form without departing from example embodiments of the invention. As another example, the service provider computer 104 (or the customer computing device 103 / charging station controller 106) may be implemented as a specialized processing machine that includes hardware and/or software for performing the methods described herein. In other embodiments, the service provider computer 104 and/or charging station controller 106 may be embodied in a same computer or computing group. Accordingly, embodiments of the invention should not be construed as being limited to any particular operating environment, system architecture, or device configuration.

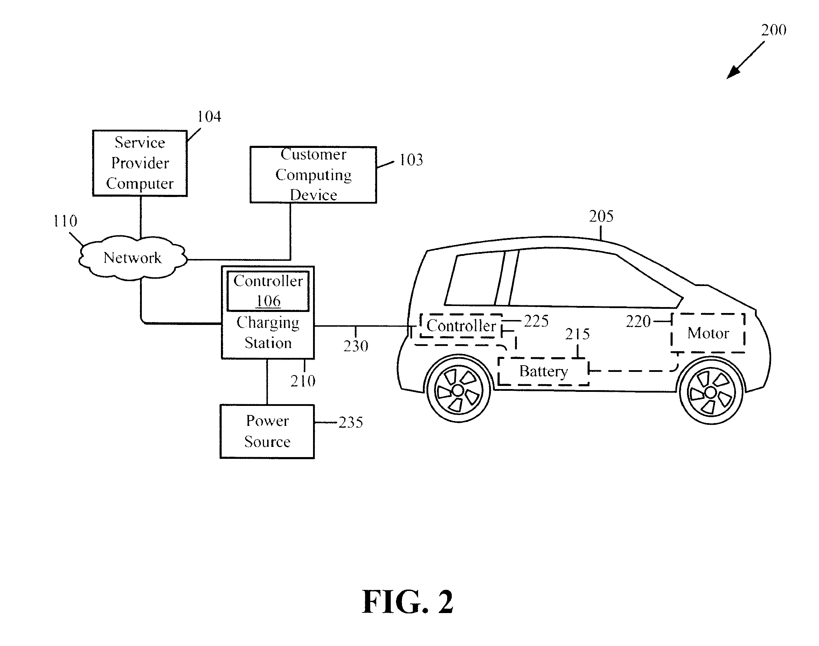

FIG. 2 illustrates an example recharging system 200, according to an example embodiment of the invention. As shown in FIG. 2, an example recharging system 200 can include a customer computing device 103, a service provider computer 104, a network 110, which may be similar to those corresponding components discussed with respect to FIG. 1. The system 200 can also include a charging station 210, a power source 235, and a plug-in electric vehicle (PEV) 205.

In FIG. 2, one or more PEVs 205 may be operated by respective automobile drivers and/or owners. In one aspect, PEV 205 may include, among other things, a motor 220, a battery 215, and a controller 225. The motor 220 may be any type of motor, electric, gas, hybrid, or otherwise, that may be used to propel the PEV 205. Further, the motor 220 of PEV 205 may be powered by battery 215 which may be coupled and controlled by controller 225. In at least one aspect, the controller 225 may control an amount of power provided the battery 215, a length of charge, or particular times when the battery 215 is to be charged. Additionally, in some aspects, the controller 225 may also collect charging and/or usage data of the PEV 205. As such, while not shown, the controller 225 may include computer-readable memory for storing the collected charging and/or usage data. Charging data may relate to the charging times, durations, temperatures, and the like of the battery 215 while being charged. Usage data may relate to the distance traveled, travel duration, temperature during travel, geographic location of travel, and the like of the PEV 205.

FIG. 2 also depicts charging station 210, although more than one charging station may be envisioned, for charging the one or more PEVs 102. A charging station 210 may be generally associated with a particular PEV 205 or may be dedicated for use of a particular driver/owner (e.g., a customer), such as when located at a home of the driver/owner of the PEV 205. However, in other instances, charging stations 110 may be public or private charging stations that can be used by more than one PEV 205. In some instances, the charging station 210 may also include a controller 106, which may be similar to that described with respect to FIG. 1. The charging station controller 106 may control access to the delivery of power 235 from a power source 235 for recharging, via the wireless or wired connection 230, the PEV 205, including recharging the battery 215 of the PEV 205. For example, a driver/owner may need to provide identification information, payment information, and/or a reservation code to the charging station controller 106, which may be authenticated by the charging station controller 106, either alone or in communication with one or more network 110 devices, including the service provider computer 104. The identification information, payment information, and/or reservation code can be provided to a charging station controller 106 by way of card reader, keypad entry, touch screen entry, or voice-activated entry to the charging station controller 106. Alternatively, the PEV 205 may include a device such as an RFID chip or other wireless device that can be read by a reader associated with the controller 106 to obtain the identification information, payment information, and/or reservation code. In yet another example, the driver/owner can use a customer computing device 103, perhaps a mobile application on a smart phone, to provide and deliver the identification information, payment information, and/or reservation code 103 via network 110 to the charging station controller 106. The identification information can include for example, one or more of the following: (i) a name of the driver/owner, (ii) a username and/or password, (iii) an alpha, numeric, or alpha-numeric combination associated with the driver/owner or a group associated with the driver/owner. The payment information can include one or more of the following: (i) a routing number and/or associated deposit account number, (ii) a credit card number and associated expiration date / security code / billing address information, or (iii) identification of a personal payment account or other payment account. As described herein, the reservation code may have been received upon completion of a reservation for one or more time slots at a charging station.

Upon receiving and authenticating the identification information, payment information, the charging station controller 106 can enable the charging station to provide power from the power source 235 to the PEV 205 via the wireless or wired connection 230. In an example embodiment of the invention, the connection 230 may be representative of a power cord from the PEV 205 to an electrical outlet of the charging station 210, or vice versa. Indeed, the charging station controller 106 can control or manage an amount of power, a duration of charge, or a time of day of charge of a PEV 205. Additionally, as with the PEV controller 225, the charging station controller 106 may collect charging and/or usage data of the charging station 210 and/or of the PEV 205 that it charged. Likewise, the controller 106 may communicate with the controller 225 during battery charging. Additionally, in some aspects, the controller 106 may control the amount of the electricity provided to the battery 215.

As described earlier, there may be a power source 235 shown in FIG. 2. The power source 235 may be an electric or power grid supplied by one or more power plants. In other aspects, a power source 235 may be a power grid supplied by any type or combination of power plants, such as nuclear, gas, fossil power, hydroelectric, wind turbine, photovoltaic, or the like. In any event, the power source 235 may provide electricity to charging stations 110 for charging PEVs 102 or other electric devices, or it may provide electricity directly to the PEVs 102. Either way, charging and/or usage data may be collected by either controller 106 or controller 225. As such, the power source 235 may also include a controller. The power source 235 may also include one or more transformers for converting the power to a voltage (e.g., 220V, etc.) for receipt by one or more charging stations 210 or PEVs 205. By way of example only, the system 200 may depict PEV 205 receiving electricity from charging station 210, and charging station 210 receiving electricity from the power source 235 at a remote location from the power source 235. However, in other embodiments, the charging station 210 may be located at the power source 235 without departing from example embodiments of the invention. Indeed, many variations of FIG. 2 are available without departing from example embodiments of the invention.

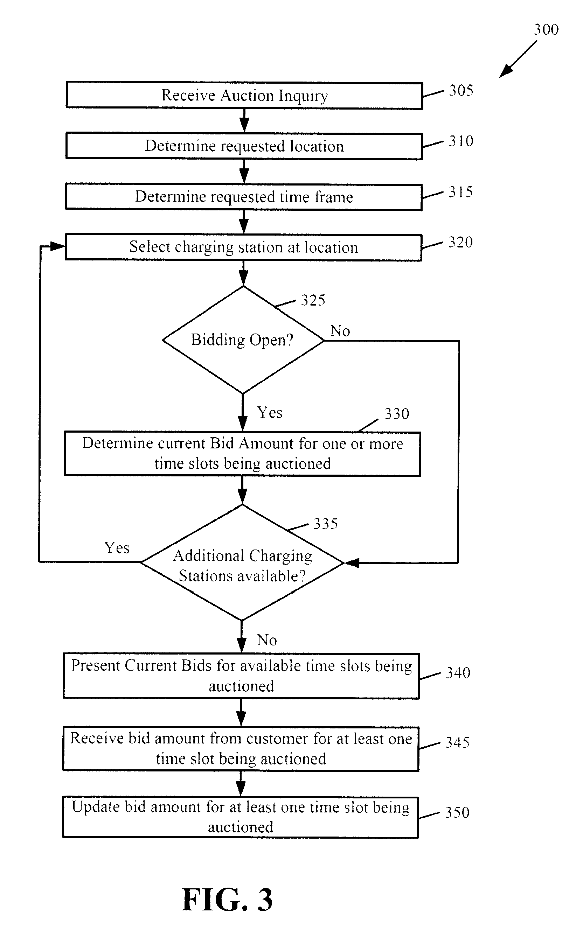

FIG. 3 illustrates an example flow diagram for an example process 300 for managing bids in accordance with an auction for one or more time slots at one or more charging stations, according to an example embodiment of the invention. The example process 300 may be implemented, at least in part, as software or computer-executable instructions, perhaps stored in memory 128, and executed by at least one processor 126 of the service provider computer 104, according to an example embodiment of the invention.

Turning now to FIG. 3, at block 305, an auction inquiry may be received. For instance, the service provider computer 104 can receive, from a customer computing device 103 via the auction web portal interface 109, an auction inquiry that requests information about one or more auctions for one or more time slots at one or more charging stations. For example, the auction inquiry can include a customer computing device 103 utilizing an Internet browser or a mobile application to access an auction website, web page, or portal supported by the auction web portal interface 109. In general, the auction inquiry may be a request to initiate a process for identifying available time slots at one or more charging stations to facilitate bidding for any desired ones of the available time slots.

Following block 305, processing may proceed to block 310, where a requested location for a charging station can be determined. The requested location can also specify an acceptable distance or radius from the specified location for purposes of identifying one or more charging stations. The requested location for the reservation may have been received as part of the auction inquiry at block 305. Alternatively, the requested location may have been previously received from the customer and stored, perhaps in database 182, during a registration process or during an update process associated with the auction system. Likewise, the requested location could also have been received in a separate message or response following receipt of the auction inquiry (e.g., in response to a website page prompting for a preferred location).

At block 315, a requested time frame for the reservation can be determined. The requested time frame can indicate one or more time ranges (e.g., 12PM - 2PM, etc.) for one or more dates that are acceptable to the customer for charging an electric vehicle 205. The requested time frame for the reservation may have been received as part of the reservation inquiry at block 305. Alternatively, the requested time frame may have been previously received from the customer and stored, perhaps in database 182, during a registration process or during an update process associated with the auction system. Likewise, the requested time frame could also have been received in a separate message or response following receipt of the auction inquiry (e.g., in response to a website page prompting for a preferred time).

At block 320, a charging station that meets the requirements for the determined location can be selected. Indeed, block 320 can determine that a charging station is within the location preferences requested by the customer. As described herein, the charging station can be at a residential location, perhaps in a home/garage of the customer. Alternatively, the charging station can also be located in a publicly accessible area, such as a shopping center, a government center, and the like. In some embodiments, there may only be one charging station that meets the requirements or preferences of the customer. Alternatively, there may be more than one charging station that meets the requirements or preferences of the customer. It will be appreciated that while FIG. 3 only illustrates two types of requirements or preferences according to blocks 315 and 320, many other types of requirements may be available. For example, there may be requirements or preferences related to maximum acceptable price, minimum acceptable time slot, recharging speed or other charging station electrical parameters (e.g., min/max voltage, min/max current, etc.), and the like. At block 320, one of the charging stations can be selected for purposes of determining respective availability for bidding in accordance with one or more auctions, according to an example embodiment of the invention.

Following block 320 is block 325. Block 325 may determine whether bidding is open or still being accepted for at least a portion of the requested time frame at the selected charging station. To determine whether the bidding is open, block 325 may determine whether the auction is still open for the selected charging station for any open time slots within the requested time frame.

If block 325 determines that bidding is open or still being accepted for at least a portion of the requested time frame at the selected charging station, then processing may proceed to block 330. Block 330 may determine the current bid amount for one or more time slots being auctioned at the selected charging station. The current bid amount may depend upon the type of auction being conducted. For example, for an ascending price auction, the current bid amount can be the opening bid amount if no other bid has been received, or the last received bid amount if at least one bid has been received. On the other hand, for a descending price auction such as a Dutch auction, the current bid amount can be based upon the amount of time that has passed since the auction began for one or more time slots of a charging station. For a "buy it now" auction, the current bid amount can be a predefined buy-it-now price. It will be appreciated that other current bid amounts can be determined based upon the type of auction being conducted.

Following block 330 is block 335. Block 335 may alternatively be reached if block 325 determines that bidding is not open or not being accepted for at least a portion of the requested time frame at the selected charging station (or a sufficient portion or minimum acceptable amount). Block 335 may determine whether any additional charging stations should be analyzed to determine whether any bids are still being accepted for any of the requested time frames. If so, then processing may return to block 320, where another charging station may be selected. Otherwise, processing may proceed to block 340.

At block 340, the current bids for available time slots being auctioned can be presented. As an example, the service provider computer 104 can utilize auction web portal interface 109 to deliver, via the Internet, a presentation of the available time slots for bidding and associated current bid amounts to an Internet browser or software application (e.g., mobile application or dedicated software application) of the customer computing device 103. In addition to presenting the current bid amounts, the next bid amount or bid increment can be presented. The customer can then review the available time slots for bidding, associated current bid amounts, and/or the next bid amounts or bid increments for each available charging station.

At block 345, a customer can choose to bid on one or more available time slots being auctioned. It will be appreciated that the customer may need to bid at least the minimum bid amount. As an example, for an ascending price auction, the customer bid amount may need to be at least the current bid amount plus a minimum increment amount. In placing the bid amount, the customer may also allow for an automatic increase in his/her bid amount up to a maximum bid amount if one or more higher competing bids are subsequently received. On the other hand, for a descending price auction, the customer bid amount may need to be at least the current bid amount that is present at the time the customer bid is placed. Likewise, for a "buy it now" auction, the customer bid amount may need to be the specified price for ending the "buy it now" auction. It will be appreciated that other customer bid amounts may be available based upon the type of auction being conducted, according to an example embodiment of the invention. Following block 345, processing may proceed to block 350. At block 350, the bid amount for the auction being bid upon may be updated based upon the customer bid amount received at block 350. The process 300 may end following block 350.

It will be appreciated that the minimum bid amounts, bid increments, and/or reserve prices can be set or increased according to a variety of factors, including one or more of: (i) an actual or expected demand for the at least one time slot, (ii) an actual or an expected load for the charging station during the at least one time slot, or (iii) an actual or expected load for the distribution equipment (e.g., a transformer) connected to the charging station during the at least one time slot. Likewise, the minimum bid amounts, bid increments, and/or reserve prices can be set or increased as a cost associated with purchasing additional load (e.g., energy supply or distribution cost) actually increases or is forecast to increase.

For example, actual demand may be based upon whether any other reservations have been reserved for any portion of the requested time frame. Alternatively, expected demand can be based upon an anticipated demand based upon particular dates, time frames, days of week, holidays, events, or the like. For instance, it may be expected that there will be a higher demand during weekends at an attraction such as at a shopping mall, an amusement park, or the like. Likewise, there may be higher demand at public charging stations during daytime hours, but lower demand at residential charging stations during daytime hours. It will also be appreciated that the demand can be attributable not to simply a charging station, but also to one or more components associated with the charging station. For example, a single transformer or transformer group may service a plurality of charging stations in proximity to each other. Accordingly, the transformer or transformer group may experience a large load from certain charging stations. Accordingly, even though one charging station may be physically available, the use of other charging stations may place a large load on a transformer or transformer group (or other electrical components servicing the charging stations). Similarly, from a systemic perspective, an entire electrical grid may experience a high demand in peak hours versus non-peak hours. Thus, there may be considerations beyond a single charging station when determining actual or expected demand or loads for purposes of minimum bid amounts, bid increments, and/or reserve prices for one or more auctions described herein.

It will be appreciated that many variations of the example process 300 of FIG. 3 are available without departing from example embodiments of the invention.

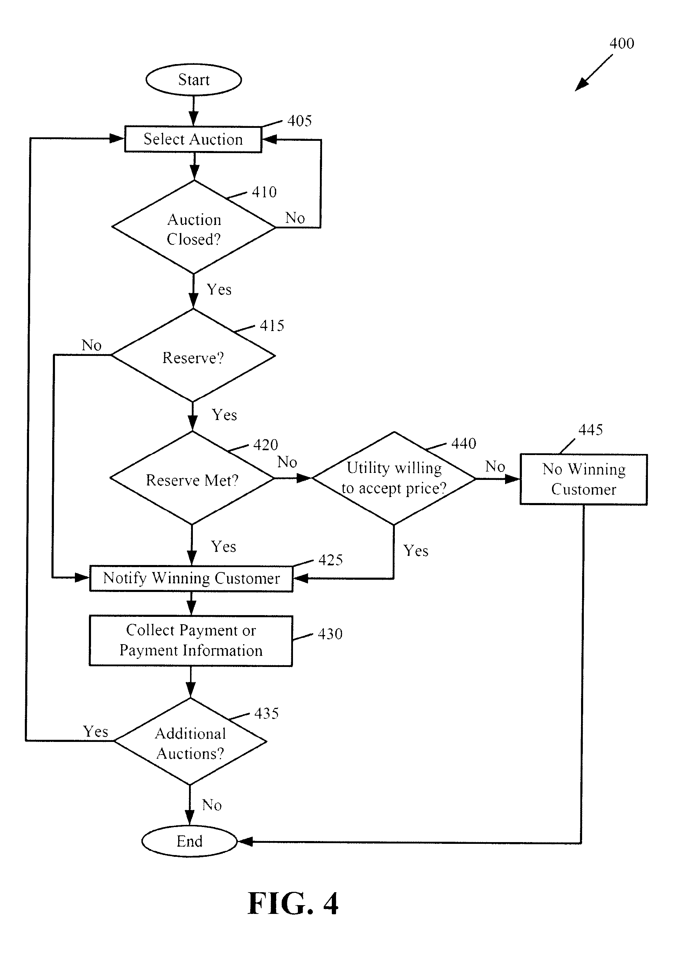

FIG. 4 illustrates an example process 400 for determining and notifying a customer who wins one or more time slots for one or more charging stations upon completion of an auction, according to an example embodiment of the invention. The example process 400 may be implemented, at least in part, as software or computer-executable instructions, perhaps stored in memory 128, and executed by at least one processor 126 of the service provider computer 104, according to an example embodiment of the invention.

Turning now to FIG. 4, at block 405, an auction may be selected for subsequently determining whether the auction has closed and whether a customer has won a completed auction. Following block 405 is block 410. Block 410 may determine whether the selected auction for one or more time slots at a charging station has closed. If the selected auction has not closed, then processing may return to block 405, where the auction may again be selected at a subsequent time for processing.

On the other hand, block 410 may determine that the selected auction has closed. For example, for an ascending price auction, the auction may have closed when the time for bidding expired. On the other hand, for a descending price auction, the auction may have closed when a bid was received for the current bid amount. Likewise, for a "buy it now" auction, the auction may have closed when a bid was received for the "buy it now" price. Where block 410 has determined that the selected auction has closed, then processing may proceed to block 415.

Block 415 may determine whether the selected auction is subject to a reserve. For example, a reserve price may have been set for an ascending or descending price auction. If the selected auction is subject to a reserve, then processing may proceed to block 420, where a determination may be made as to whether the reserve price has been met. If the customer bid amount meets the reserve price (e.g., a minimum price that is guaranteed to be accepted), then processing may proceed to block 425, where a winning customer may be notified, as described below.

On the other hand, block 420 may determine that the customer bid amount does not meet the reserve price, and processing may proceed to block 440. At block 440, a determination may be made as to whether a utility company is willing to accept the customer bid amount that is lower than the reserve price. According to an example embodiment, this determination may be made by the service provider computer 104 based upon acceptable ranges specified by the utility company. In another example embodiment, a utility company may be contacted, perhaps electronically, to determine whether the customer bid amount will be accepted. A response from the utility company may indicate whether the customer bid amount will be accepted. If block 440 determines that the utility company is not willing to accept a customer bid amount that is lower than the reserve price, then processing may proceed to block 445, where there may not be any winning customer for the auction. The customer can be informed using the communication means described herein that his/her bid was not accepted. On the other hand, if the utility is willing to accept a customer bid amount that is lower than the reserve price, then processing may proceed to block 425.

Block 425 can also be reached from block 420 when the reserve price has been met, or from block 415 when an auction is determined to not be subject to a reserve price. At block 425, the service provider computer 104 can notify the winning customer that his/her bid amount was successfully accepted upon completion of an auction for one or more time slots at one or more charging stations. For example, the service provider computer 104 can utilize auction web portal interface 109 to deliver, via the Internet, a winning notification to an Internet browser or software application of the customer computing device 103. Alternatively, the winning notification can be in the form of an email, a text message, or the like. In addition, the winning notification can also include a reservation code, as discussed herein. However, it will be appreciated that this reservation code may also be delivered upon receipt of payment for the auction, as likewise discussed herein.

Following block 425 is block 430. At block 430, payment for the auction may be collected from the customer. The payment may be the full price of the winning bid amount, or it may be for only a portion of the winning bid amount (e.g., a deposit). In an example embodiment, the payment, or information associated therewith, may be obtained from the customer. For example, the customer may provide financial instrument information to the service provider computer 104 via a website/webpage supported by auction web portal interface 109. In another example embodiment, the service provider computer 104 may already have access to a financial instrument information of the customer in order to complete the payment or partial payment. The financial instrument may be associated with a credit card, a debit card, a checking account, a savings account, a personal payment account (e.g., PayPal, etc.), or a prepaid account with the reservation system, according to an example embodiment of the invention. Accordingly, the financial instrument information may be, for example, (i) an account number, expiration date, and/or security code (for a credit card/ debit card), (ii) an account number and routing number (for a deposit account such as a checking or savings account), or (iii) an account identifier (e.g., username, email address, telephone number, etc.) and/or account number for a personal payment account or prepaid account. At block 430, the service provider computer 104 can direct processing of the deposit or payment/prepayment. For example, the service provider computer 104 or another associated financial processing computer can deliver an authorization request or a debit request to a credit card processing network, an ATM / deposit account processing network, or another financial processing network or switch. The service provider computer 104 can then receive a response indicating whether the deposit or payment/prepayment has been authorized or approved. If the deposit or payment/prepayment has not been authorized or approved, the service provider computer 104 can communicate with customer computing device 103 to receive and process alternative financial instrument information to complete the deposit or payment/prepayment.

Upon confirmation of receipt of the payment or payment information, the service provider computer 104 can also deliver a reservation code to the customer computing device 103. The reservation can be a code that is unique for a customer and/or particular reservation that is confirmed based upon the customer winning an auction. The reservation code may need to be entered by the customer in order to activate or use a charging station 210 to recharge a battery 215 of the electric vehicle 205, according to an example embodiment of the invention. In an alternative embodiment, the reservation code can be delivered directly to a wireless card or device of the customer that can be wirelessly retrieved or received by the charging station controller 106.

Following block 430 is block 435. Block 435 may determine whether any additional auctions should be analyzed. If so, then processing may return to block 405, where another auction may be selected. Otherwise, processing may end for the example processing 400 after block 435.

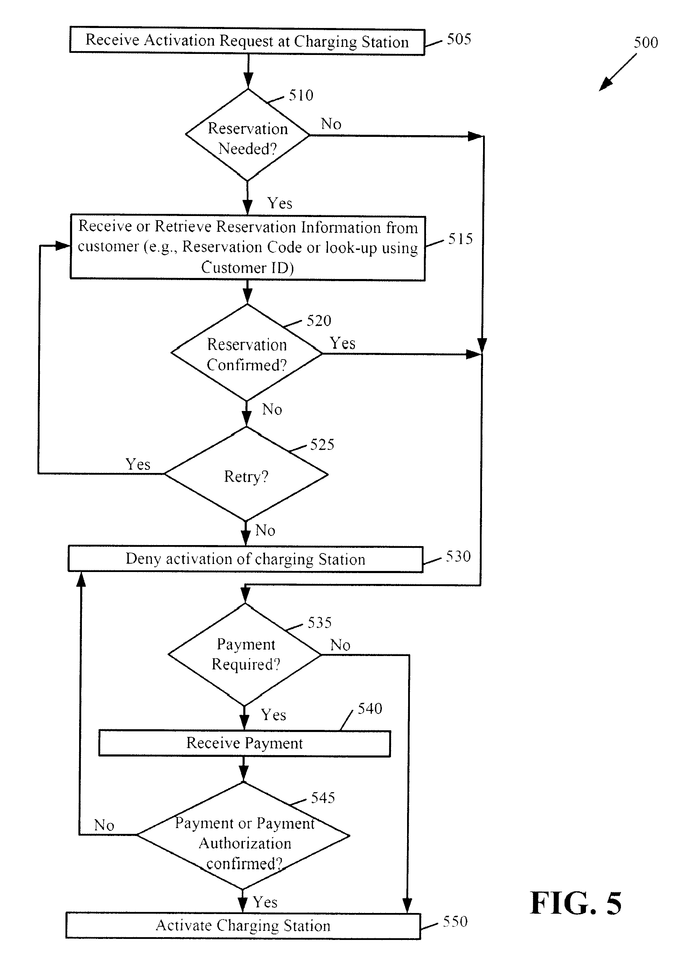

FIG. 5 illustrates an example flow diagram for an example process 500 for processing an activation request at a charging station, according to an example embodiment of the invention. The example process 500 may be implemented, at least in part, as software or computer-executable instructions, perhaps stored in memory 128, and executed by at least one processor 126 of the service provider computer 104, according to an example embodiment of the invention. Alternatively, the example process 500 may be implemented, at least in part, as software or computer-executable instructions, perhaps stored in memory 160, and executed by at least one processor 158 of the charging station controller 106, according to an example embodiment of the invention.

Turning now to FIG. 5, at block 505, an activation request may be received at the charging station 210, and in particular by the charging station controller 106. As an example, the charging station controller 106 may include a display and/or user interface (e.g., keypad, touch screen, magnetic stripe reader, RFID or wireless reader, etc.) that may be available at the charging station 210 to receive the activation request. As part of the activation request, the customer may provide information from an identification card to the charging station 210, for example, by swiping the identification card through a magnetic stripe reader or otherwise maintaining the identification card in proximity of the reader of the charging station controller 106. Alternatively, a wireless communications device of the customer (e.g., RFID card, smart phone) can be used to communicate with the charging station controller 106. In some example embodiments, the activation request may be delivered from the charging station controller 106 to the service provider computer 104.

Following block 505 is block 510. Block 510 may determine whether a confirmed reservation is needed to utilize the charging station 210. If a reservation is needed, then processing may proceed to block 515. At block 515, the charging station controller 106 may request and receive reservation information from the customer. As an example, the user may enter the previously received reservation code on the keypad, touch screen, or other input interface (e.g., wirelessly via a smart phone) to the charging station controller 106. Alternatively, at block 515, the charging station controller 106 may access the reservation information based upon customer information or a customer ID. As an example, the charging station controller 106 may have previously received, perhaps from the service provider computer 104, reservation information that was stored in conjunction with customer information or a customer ID. Alternatively, the charging station controller 106 may communicate with the service provider computer 104 and/or the database 182 to obtain the reservation information.

Following block 515, processing may proceed to block 520. Block 520 may determine whether the reservation can be confirmed based upon the reservation information. For example, block 520 can determine whether the received reservation information matches the required reservation information. If block 520 determines that the reservation information has been confirmed, then processing may proceed to block 535 discussed below. As another example, block 520 can determine whether the reservation information was successfully retrieved based upon the customer information or customer ID.

On the other hand, if the received reservation information cannot be confirmed at block 520, then processing may proceed to block 525. Block 525 may determine whether to allow the customer to retry by resubmitting reservation information (or customer information/ customer ID if the reservation information is being looked up based upon the customer ID/customer information). Block 525 may have a predetermined number of retries available to the customer. If block 525 determines that the customer can resubmit reservation information, then processing may return to block 515. Otherwise, processing may proceed to block 530, where the customer may be denied activation of or access to the charging station 210.

As discussed above, block 535 may be reached if block 520 confirms the reservation or reservation information. Block 535 determines whether payment is required. For example, block 535 may determine that a prior deposit or payment was already received such that no additional payment is needed. If block 535 determines that payment or additional payment is required, then processing may proceed to block 540, where a payment can be received from the customer. For example, the customer can provide payment information that identifies a financial instrument to be used for the payment. Upon receiving the payment information, the charging station controller 106 can then process the payment. For example, the charging station controller 106 can deliver an authorization request or a debit request to a credit card processing network, an ATM / deposit account processing network, or another financial processing network or switch. Alternatively, the charging station controller 106 can communicate the payment information to the service provider computer 104, which can perform the aforementioned authorization request or debit request.

At block 545, a payment response may be received from a financial processing network and/or service provider computer 104 with the results of the financial processing. If an approved response has been received or if the payment or payment authorization has been confirmed, then processing may proceed to block 550, where the charging station 210 can be activated to allow the customer to recharge the electric vehicle 205, according to an example embodiment of the invention. Otherwise, processing may proceed to block 530, where the customer may be denied activation of or access to the charging station 210.

Various embodiments of the invention may include one or more special purpose computers, systems, and/or particular machines that facilitate the network communications with various network devices. A special purpose computer or particular machine may include a wide variety of different software modules as desired in various embodiments. As explained in greater detail below, in certain embodiments, these various software components may be utilized to facilitate communications between one or more entities, including a customer, service provider, charging station, and utility company. Additionally, these various software components may be utilized to support auctioning charging times for electric vehicles.

The invention is described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer usable medium having a computer- readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special purpose hardware and computer instructions.

While the invention has been described in connection with what is presently considered to be the most practical and various embodiments, it is to be understood that the invention is not to be limited to the disclosed embodiments, but on the contrary, is intended to cover various modifications and equivalent arrangements included within the scope of the appended claims.

This written description uses examples to disclose the invention, including the best mode, and also to enable any person skilled in the art to practice the invention, including making and using any devices or systems and performing any incorporated methods. The patentable scope of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A system (100), comprising:
at least one memory (128) that stores computer-executable instructions;
at least one processor (126) configured to access the at least one memory (128), wherein the at least one processor (126) is configured to execute the computer-executable instructions to:
deliver, to a customer computing device (103) associated with a customer, auction information regarding an auction for least one time slot of a charging station (210) for an electric vehicle (205);
receive, from the customer computing device (103), a bid amount for the auction; and
deliver, a notification to the customer computing device (103) if the received bid amount is accepted as a winning bid amount for the auction.

2. The system (100) of Claim 1, wherein the auction is an ascending price auction or a descending price auction.

3. The system (100) of Claim 2, wherein the ascending price auction or the descending price auction further includes a reserve amount associated with a minimum acceptable bid amount.

4. The system (100) of Claim 3, wherein the reserve amount is set based at least in part on at least one of: (i) an expected demand for the at least one time slot, (ii) an expected load for the charging station (210) during the at least one time slot, or (iii) an expected load for distribution equipment connected to the charging station (210) during the at least one time slot.

5. The system (100) of any one of Claims 1 to 4, wherein the at least one processor (126) is configured to execute the computer-executable instructions to:
receive payment or payment information from the customer when the received bid amount is accepted as the winning bid amount for the auction.

6. The system (100) of any one of Claims 1 to 5, wherein the received bid is accepted as the winning bid if it corresponds to an immediate purchase price for the auction.

7. The system (100) of any one of Claims 1 to 6, wherein the auction information is delivered based upon an auction inquiry from the customer computing device (103), the auction inquiry specific to a requested location or a requested time frame for charging the electric vehicle (205).

8. The system (100) of any one of Claims 1 to 7, wherein the notification includes a unique reservation code, the reservation code for entry by the customer at the charging station (210).

9. The system (100) of any one of Claims 1 to 8, wherein the delivered auction information identifies at least one of (i) a minimum bid amount, or (ii) a current bid amount.

10. The system (100) of Claim 9, wherein the minimum bid amount or the current bid amount is increased as an expected load increases for the charging station (210), or a transformer associated with the charging station (210), during the at least one time slot.

11. The system of Claim 9, wherein the minimum bid amount or the current bid amount is increased as a cost associated with purchasing additional load actually increases or is forecast to increase.

12. The system of any one of Claims 1 to 11, wherein the customer computing device (103) comprises a tablet computer, a desktop computer, a laptop computer, a personal communications device, or a smart phone.

13. A method, comprising:
delivering, by a service provider computer to a customer computing device (103) associated with a customer, auction information regarding an auction for at least one time slot of a charging station for an electric vehicle;
receiving, by the service provider computer from the customer computing device (103), a bid amount for the auction; and
delivering, by the service provider computer, a notification to the customer computing device (103) if the received bid amount is accepted as a winning bid amount for the auction.

14. The method of Claim 13, wherein the auction is an ascending price auction or a descending price auction.

15. The method of Claim 14, wherein the ascending price auction or the descending price auction further includes a reserve amount associated with a minimum acceptable bid amount.
